# EUROPÄISCHE PATENTSCHRIFT

(11) **EP 0 365 991 B1**
(45) Veröffentlichungstag und Bekanntmachung des Hinweises auf die Patenterteilung: **21.12.1994**
(21) Anmeldenummer: 89119328.6
(22) Anmeldetag: 18.10.1989
(51) Int. Cl.: G11B 15/61, G11B 15/43

(54) **Führung für ein Magnetband**
Guide for magnetic tape
Guide pour bande magnétique

(30) Priorität: 27.10.1988 DE 3836621
(43) Veröffentlichungstag der Anmeldung: 02.05.1990
(73) Patentinhaber: Deutsche Thomson-Brandt GmbH, 78003 Villingen-Schwenningen (DE)
(72) Erfinder: Schandl, Hartmut, Dipl.-Ing., D-7730 Villingen (DE)

(56) Entgegenhaltungen:
- EP-A- 0 083 932
- EP-A- 0 186 591
- EP-A- 0 261 342
- DE-A- 3 040 016
- US-A- 3 375 963
- US-A- 4 440 358
- PATENT ABSTRACTS OF JAPAN Band 11, nr. 29 (P-540)(2476), 28 Januar 1987 & JP-A-61 199262 (HITACHI) 3.9.1986

## Beschreibung

Magnetbandgeräte für Bildaufzeichnung benötigen hohe Relativgeschwindigkeiten zwischen Magnetband und Schreib-Lesekopf.

Diese wird im allgemeinen durch das bekannte "Helical-Scan"-System erreicht. Dabei wird das Band aus der Kassette herausgezogen und in einer Schleife schraubenförmig um eine rotierende Kopftrommel gelegt.

Um die nur wenige µ breiten Spuren sicher abzutasten ist sowohl an der Kopftrommel, als auch in den zu- und ablaufenden Bandästen eine präzise Bandführung notwendig.

Im einlaufenden Bandast werden normalerweise zwei Höhenführungen angeordnet, eine ortsfeste zwischen Bandzugfühler und Löschkopf, und die zweite als Führungsflansch an der Umlenkrolle des Fädelwagens. Beide Führungen werden im allgemeinen mit Hilfe von Schraubspindeln in der Höhe justiert.

Um mit einem Magnetbandrecorder gemäß Oberbegriff der unabhängigen Ansprüche am Trommeleinlauf einen guten Band-Kopf-Kontakt und stabilen Bandlauf zu erhalten, ohne die Gesamtbandspannung unnötig zu erhöhen, wird die Bandunterkante stärker gespannt (DE-A-3040016 und EP-A-0083932). Das führt zu einer säbelförmigen Verkrümmung des Einlaufbandastes. Der Krümmungsradius ist außer von der Bandspannung auch von der Bandsorte abhängig und führt bei nicht optimaler Kompensation durch die erste Höhenführung zu einem unerwünscht schrägen Einlaufen in die Umlenkrolle, wodurch die Bandkante durch Schraubung mit übermäßig hoher Kraft an den Führungsflansch gedrückt und überdehnt wird.

Eine optimale Bandführung kann bei fest justierten Flanschen nur für eine Bandsorte erreicht werden.

Der Erfindung liegt die Aufgabe zugrunde, die Bandführung im Bereich des Bandeinlaufs vor der Kopftrommel zu verbessern.

Aus dem Dokument EP-A-0 186 591 ist eine Bandzug-Einstellvorrichtung bekannt, mit einem schwenkbar gelagerten Bandzugfühlhebel, auf dem auf einer senkrechten Achse eine Bandführungsrolle angeordnet ist. Diese, zur Bandführung einen oberen und einen unteren Flansch aufweisende Bandführungsrolle ist mittels einer sich auf dem Bandzugfühlhebel abstützenden Druckfeder in der Höhe positioniert.

Ferner ist aus dem Dokument JP-A-61 199 262 eine einen oberen und einen unteren Flansch aufweisende Bandführungsrolle bekannt, die an der Bandeinlaufseite der rotierenden Kopftrommel eines Videorecorders angeordnet ist. Im unteren Flansch ist eine koaxial angeordnete Bandstützeinrichtung vorgesehen, die mittels einer Druckfeder so betätigbar ist, daß das Band mit seiner oberen Kante gegen den oberen Flansch gedrückt wird, um bereits zu Beginn des Aufnahme- oder Wiedergabebetriebes einen stabilen bzw. schwingungsfreien Bandlauf zu bewirken.

Die oben gestellte Aufgabe wird gemäß der Erfindung durch die im Anspruch 1 oder im Anspruch 2 aufgeführten Merkmale gelöst. Eine vorteilhafte Weiterbildunge der Erfindung ist in dem Unteranspruch gekennzeichnet.

Im Prinzip wird eine gefederte Führung in den Bandzugfühlstift integriert, so können durch Weglassen der ortsfesten Führung Kosten gespart werden. Da der Bandzugfühler ein leicht bewegliches Element sein muß, kann eine fixe Höhenführung an diesem Stift nicht genau genug positioniert werden. Wenn nun dort ein gefederter Führungsflansch eingesetzt wird, dessen Federkraft die Durchbiegung quer zur Bandlaufrichtung kompensiert, so kann, da die Bandspannung geregelt ist, der optimale Einlaufwinkel in die Umlenkrolle besser erreicht werden als mit einer festen Führung.

Im folgenden soll die Erfindung anhand von Figuren beispielhaft näher erläutert werden:
- Figur 1: zeigt eine bekannte Bandführung
- Figur 2: zeigt mögliche Bandführungen im Bereich des Bandeinlaufes zur Kopftrommel
- Figur 3: zeigt eine erfindungsgemäße Bandführung
- Figur 4: zeigt einen möglichen Aufbau für den gefederten Bandzugfühlstift.

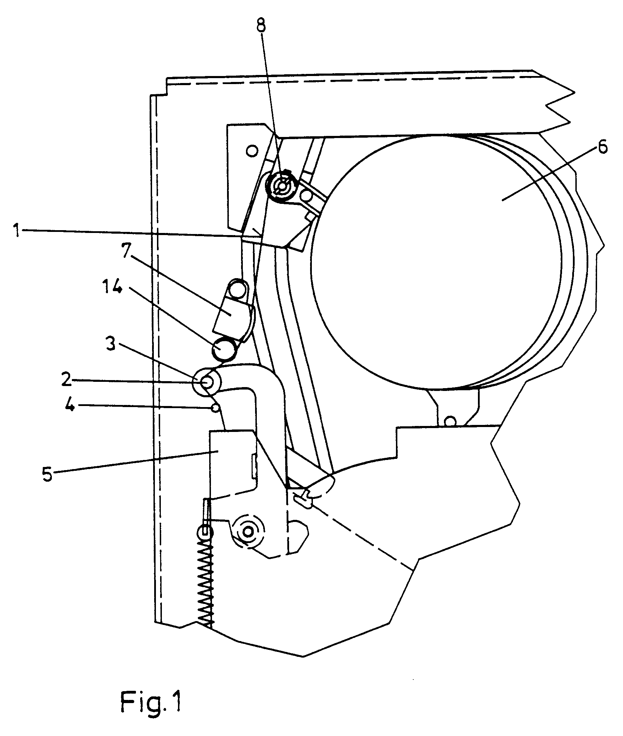

Figur 1 zeigt eine bekannte Bandführung. Das Magnetband 1 ist aus einer Kassette 5 herausgezogen und über Umlenkstift 4, Bandzugfühler 3, Höhenführung 2, Tonkopf 7 und Umlenkrolle 8 an die Kopftrommel 6 gelegt.

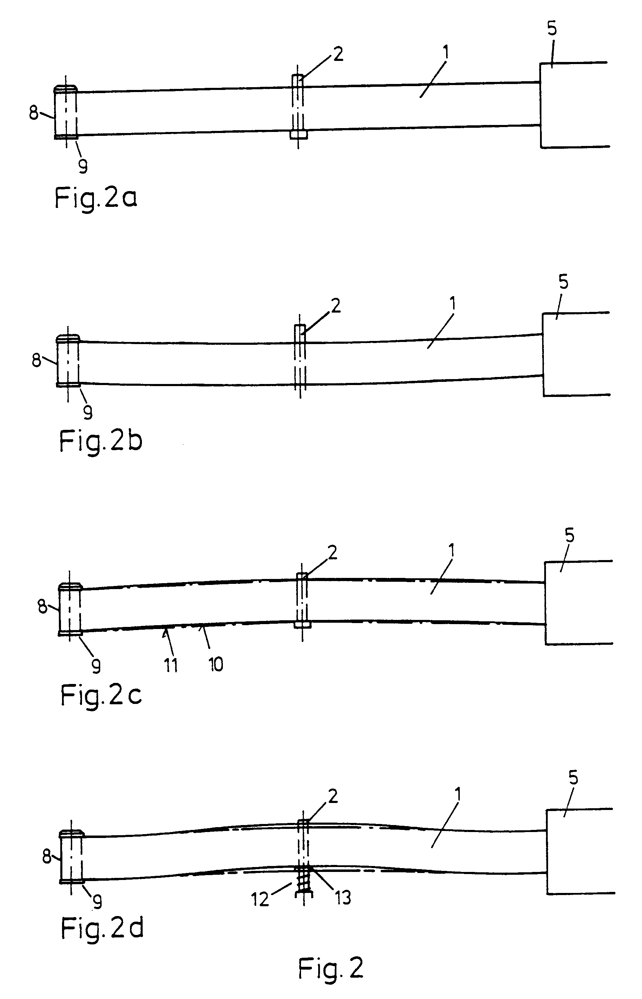

Figur 2 zeigt mögliche Bandführungen im Bereich des Bandeinlaufes zur Kopftrommel.

Figur 2a zeigt eine ideale Bandführung, bei der die in der Höhe einstellbare Führung 2 mit einem Flansch versehen ist, auf dem sich die Unterkante von Magnetband 1 abstützt. Der an der Umlenkrolle 8 angebrachte Hilfsflansch 9 ist in einer Ebene mit dem Flansch von Führung 2, derart, daß ein schräges Einlaufen des Magnetbandes in die Umlenkrolle 8 vermieden wird.

Figur 2b zeigt eine Führung 2 ohne Flansch. Hierbei erfolgt eine Belastung der Bandkante im Bereich von Hilfsflansch 9, da das Magentband 1 je nach Steifigkeit mehr oder weniger "durchgebogen" ist.

Figur 2c zeigt eine fest eingestellte Führung 2, durch die sowohl für ein steifes Band 10 als auch für ein weiches Band 11 eine gleiche Führungshöhe vorgegeben wird. Durch die verschiedenen Bandsorten ergeben sich unterschiedliche Einlaufwinkel im Bereich des Hilfsflansches 9 der Umlenkrolle 8.

Figur 2d zeigt eine gefederte Führung 2, durch die bei unterschiedlichen Bandsorten die verschiedenen Bandsteifigkeiten durch die Feder 12 ausgeglichen werden, so daß sich durch die den Bandsteifigkeiten über Flansch 13 angepaßten Höheneinstellungen in Umlenkrolle 8 stets der gleiche Einlaufwinkel ergibt.

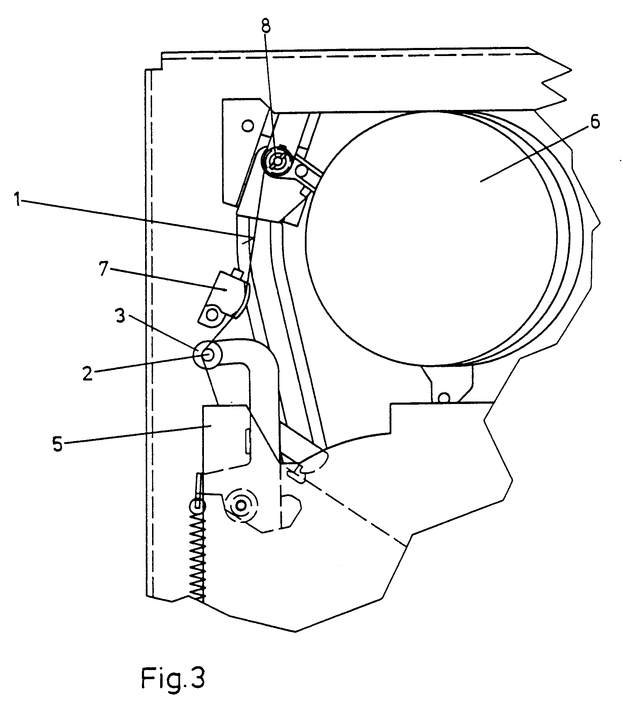

Figur 3 zeigt eine erfindungsgemäße Bandführung. Das Band 1 ist aus einer Kassette 5 herausgezogen und über Bandzugfühler 3 mit dem gefederten Bandzugfühlstift 2, Tonkopf 7 und Umlenkrolle 8 an die Kopftrommel 6 gelegt. Eine weitere Führung zwischen dem gefederten Bandzugfühlstift 2 und der Umlenkrolle 8 ist nicht vorgesehen.

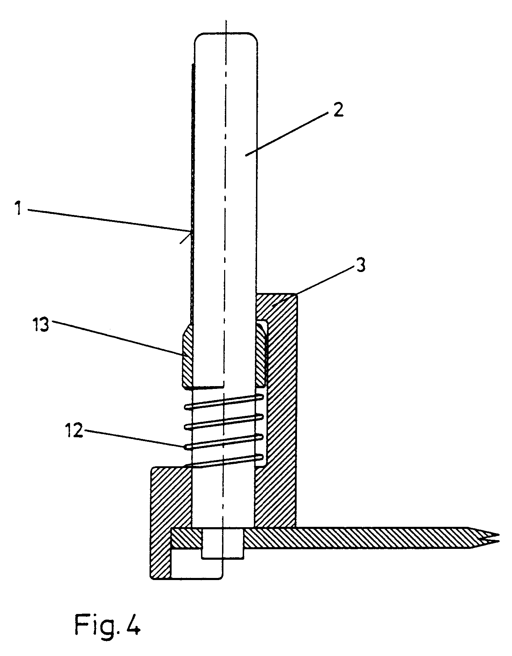

Figur 4 zeigt einen möglichen Aufbau für den gefederten Bandzugfühlstift. Auf dem Bandzugfühlhebel 3 ist der Fühlstift 2 fest angeordnet. Ein auf dem Fühlstift 2 beweglicher Flansch 13, auf dem sich das Magnetband 1 mit seiner Unterkante abstützt, ist durch eine Druckfeder 12 höhenverstellbar fixiert. Die Feder 12 stützt sich auf dem Bandzugfühlhebel 3 ab.

In einer nicht dargestellten Anordnung kann der Flansch 13 fest mit dem Fühlstift 2 verbunden sein. In dieser Anordnung muß der gesamte Fühlstift 2 beweglich und durch Federdruck der Druckfeder 12 gegen den Bandführungshebel 3 ausgerichtet sein.

## Patentansprüche

1. Magnetbandrecorder, der nach dem "Helical-Scan"- System arbeitet, und der im Bereich des Bandeinlaufs vor der Kopftrommel (6) eine Umlenkrolle (8) und einen auf einem Bandzugfühlhebel (3) befestigten Bandzugfühlstift (2) aufweist, **dadurch** **gekennzeichnet,** daß auf dem Bandzugfühlstift (2) zur Führung der Magnetbandunterkante ein verschiebbarer Flansch (13) angeordnet ist, dessen Höhenlage durch eine sich am Bandzugfühlhebel (3) abstützende Druckfeder (12) bestimmt ist, deren Federkraft so ausgelegt ist, daß die Einlaufwinkel des Magnetbandes an der Umlenkrolle (8) bei verschiedenen Steifigkeiten der verwendeten Magnetbänder konstant ist.

2. Magnetbandrecorder, der nach dem "Helical-Scan"- System arbeitet, und der im Bereich des Bandeinlaufs vor der Kopftrommel (6) eine Umlenkrolle (8) und einen auf einem Bandzugfühlhebel (3) befestigten Bandzugfühlstift (2) aufweist, **dadurch** **gekennzeichnet**, daß der Bandzugfühlstift (2) zur Führung der Magnetbandunterkante einen fest angebrachten Flansch aufweist, und daß der Bandfühlstift (2) durch eine sich gegen den Bandzugfühlhebel (3) abstützende Druckfeder (12) höhenverstellbar ist, deren Federkraft so ausgelegt ist, daß die Einlaufwinkel des Magnetbandes an der Umlenkrolle (8) bei verschiedenen Steifigkeiten der verwendeten Magnetbänder konstant ist.

3. Magnetbandrecorder nach einem der Ansprüche 1 oder 2, **da****durch gekennzeichnet**, daß keine weitere Bandführung zwischen Bandfühlstift (2) und Umlenkrolle (8) vorhanden ist.

## Claims

1. A magnetic tape recorder, which operates according to the "Helical-Scan" system, and which in the region of the incoming tape run before the head drum (6) has a deflecting roller (8) and a tape-tension sensing pin (2) fixed on a tape-tension sensing lever (3), characterised in that on the tape tension sensing pin (2) for guidance of the lower edge of the magnetic tape there is provided a displaceable flange (13), the vertical position of which is determined by a pressure spring (12) resting on the tape tension sensing lever (3), the resilience of the spring being designed so that the running-in angle of the magnetic tape at the deflecting roller (8) is consistent with different stiffnesses of the magnetic tapes used.

2. A magnetic tape recorder, which operates according to the "Helical-Scan" system, and which in the region of the incoming tape run before the head drum (6) has a deflecting roller (8) and a tape-tension sensing pin (2) fixed on a tape-tension sensing lever (3), characterised in that the tape tension sensing pin (2) for guidance of the lower edge of the magnetic tape has a fixedly mounted flange, and that the tape sensing pin (2) is vertically adjustable by means of a pressure spring (12) resting against the tape tension sensing lever (3), the resilience of the spring being designed so that the running-in angle of the magnetic tape at the deflecting roller (8) is consistent with different stiffnesses of the magnetic tapes used.

3. A magnetic tape recorder according to any one of claims 1 or 2, characterised in that no further tape guide is provided between tape sensing pin (2) and deflecting roller (8).

## Revendications

1. Enregistreur à bande magnétique fonctionnant selon le système "Helical-Scan" et présentant dans la zone de l'entrée de la bande, avant le tambour de tête (6), un galet de renvoi (8) et une tige de détection de tension de bande (2) fixée sur un levier de détection de tension de bande (3), caractérisé en ce que, sur la tige de détection de tension de bande (2), une bride mobile (13) destinée au guidage du bord inférieur de la bande magnétique est agencée, dont la position en hauteur est déterminée par un ressort de pression (12) s'appuyant sur un levier de détection de tension de bande (3), ressort dont l'élasticité est conçue de telle sorte que l'angle d'entrée de la bande magnétique est constant sur le galet de renvoi (8) pour différentes rigidités de bandes magnétiques utilisées.

2. Enregistreur à bande magnétique fonctionnant selon le système "Helical-Scan" et présentant dans la zone de l'entrée de la bande, avant le tambour de tête (6), un galet de renvoi (8) et une tige de détection de tension de bande (2) fixée sur un levier de détection de tension de bande (3), caractérisé en ce que la tige de détection de tension de bande (2) présente une bride qui y est fixée pour le guidage du bord inférieur de la bande magnétique, et que la tige de détection de tension de bande (2) est réglable en hauteur grâce à un ressort à pression (12) s'appuyant contre le levier de détection de tension de bande (3), ressort dont l'élasticité est conçue de telle sorte que l'angle d'entrée de la bande magnétique est constant sur le galet de renvoi (8) pour différentes rigidités de bandes magnétiques utilisées.

3. Enregistreur à bande magnétique selon l'une des revendications 1 ou 2, caractérisé en ce qu'aucun autre guidage de bande n'est présent entre la tige de détection de tension de bande (2) et le galet de renvoi (8).
